# EUROPÄISCHE PATENTSCHRIFT

(11) **EP 0 564 675 B1**
(45) Veröffentlichungstag und Bekanntmachung des Hinweises auf die Patenterteilung: **21.07.1999**
(21) Anmeldenummer: 92105946.5
(22) Anmeldetag: 07.04.1992
(51) Int. Cl.: E04C 2/12, B27D 1/06

(54) **Holzbauelement**
Wood-construction element
Elément de construction en bois

(43) Veröffentlichungstag der Anmeldung: 13.10.1993
(73) Patentinhaber: Häring, Thomas, 3084 Wabern (CH); Häring, Cornelia, 4052 Basel (CH)
(72) Erfinder: Haering, Willy, (DE)
(74) Vertreter: Braun, André

(56) Entgegenhaltungen:
- CH-A- 193 552
- DE-C- 541 458
- DE-C- 553 854
- DE-C- 641 242
- US-A- 3 168 763

## Beschreibung

Die Erfindung betrifft ein abgesperrtes Holzbauelement aus mindestens drei kreuzweise verleimten Schichten parallel angeordneter Leisten gemäß DE-C-641242. In diesem Dokument sind die Leisten jeder Lage unter sich durch Leim verbunden.

Im Gegensatz zum abgesperrten Holzbauelement gemäß DE-C-541458 weist das Holzbauelement gemäß der Erfindung keine auf den Außenseiten der zwei außeren Schichten geleimte Deckschicht auf.

Als abgesperrtes Holz soll für den Zweck dieser Beschreibung jedes plattenförmige Holzelement verstanden werden, das aus kreuzweise angeordneten und miteinander verleimten Vollholzleisten zusammengesetzt ist, unabhängig von seiner Dicke und seinen sonstigen Dimensionen.

Bekanntlich wird abgesperrtes Holz in vielfältigster Weise eingesetzt, wenn eine Reihe von Eigenschaften erzielt werden sollen, die von Massivholz nicht erfüllt werden. Insbesondere das sogenannte Arbeiten des Holzes infolge von Temperatur- und insbesondere Feuchtigkeitseinflüssen ist bei abgesperrtem Holz wesentlich weniger ausgeprägt als bei Massivholz. Es darf aber nicht übersehen werden, dass auch abgesperrtes Holz arbeitet und dass dies langfristig zu einer Zerstörung der Verleimung führen kann. Aus diesem Grund ist der Einsatz von grossflächigen Bauelementen aus abgesperrtem Holz im Hochbau, speziell beim Wohnungsbau, bis heute problematisch.

Der Erfindung liegt die Aufgabe zugrunde, ein Holzbauelement zur Verfügung zu stellen, das einerseits die Vorteile des abgesperrten Holzes aufweist und andererseits von den genannten Nachteilen frei ist.

Erfindungsgemäss wird dies erreicht durch ein abgesperrtes Holzbauelement der eingangs genannten Art, bei dem die in einer Schicht parallel angeordneten Leisten untereinander nicht verleimt sind und nur an den Kreuzungsflächen mit den Leisten der angrenzenden Schicht verleimt sind.

Auf diese Weise entsteht ein vorzugsweise plattenförmiges Bauelement, dessen Deckschichten aus parallelen Leisten bestehen, die einander berühren, aber nicht miteinander verbunden sind. In der Regel ist ein derartiges Bauelement aus drei Schichten aufgebaut. Die mittlere Schicht ist entweder gleich wie die Deckschichten, d.h. sie besteht ebenfalls aus parallel angeordneten, einander berührenden aber nicht miteinander verleimten Leisten. Alternativ können die Leisten der mittleren Schicht zwar parallel zueinander, aber im Abstand voneinander angeordnet sein. Die erfindungsgemässen abgesperrten Holzbauelemente werden vorzugsweise im üblichen Normmass von 1220 x 2440 mm hergestellt.

Es ist jedoch auch möglich, mehr als drei Schichten zu verwenden. Vorzugsweise sollte es sich dabei um eine ungerade Anzahl Schichten handeln, also beispielsweise 5 oder 7. Dadurch könnten dann auch Holzbauelemente mit grösseren Massen als dem üblichen Normmass hergestellt werden.

Die zur Herstellung des erfindungsgemässen Bauelements geeigneten Leisten haben vorzugsweise einen quadratischen Querschnitt von ca. 25 x 25 mm. Ihre Dimension sollte 50 mm nicht überschreiten. Bei Dimensionen über 25 mm wird vorzugsweise eine Längsnut in den Klebeflächen vorgesehen, damit die effektiv verklebte Fläche 25 x 25 mm nicht wesentlich überschreitet.

Die erfindungsgemässen Bauelemente können in herkömmlicher Weise verarbeitet werden. Insbesondere können für den Einsatz als Fussbodenelemente Nut und Feder zur Verbindung vorgesehen werden.

Im folgenden werden anhand der beiliegenden Zeichnungen Ausführungsbeispiele der Erfindung beschrieben. Es zeigen:
- Fig. 1: einen Ausschnitt einer speziell für Wände geeigneten Platte
- Fig. 2: einen Ausschnitt einer weiteren Form einer Wandplatte
- Fig. 3: einen Ausschnitt einer speziell für Fussböden geeigneten Platte
- Fig. 4: einen Teil einer Wohnbaukonstruktion mit Platten nach den Fig. 1-3.

Die in den Figuren gezeigten Ausführungsbeispiele der Erfindung beziehen sich speziell auf abgesperrte Holzbauelemente für den Hochbau, insbesondere den Wohnungsbau. Selbstverständlich sind die erfindungsgemässen Bauelemente wesentlich breiter anwendbar, so dass die Erfindung keineswegs auf Bauelemente für Hochbauanwendungen beschränkt ist.

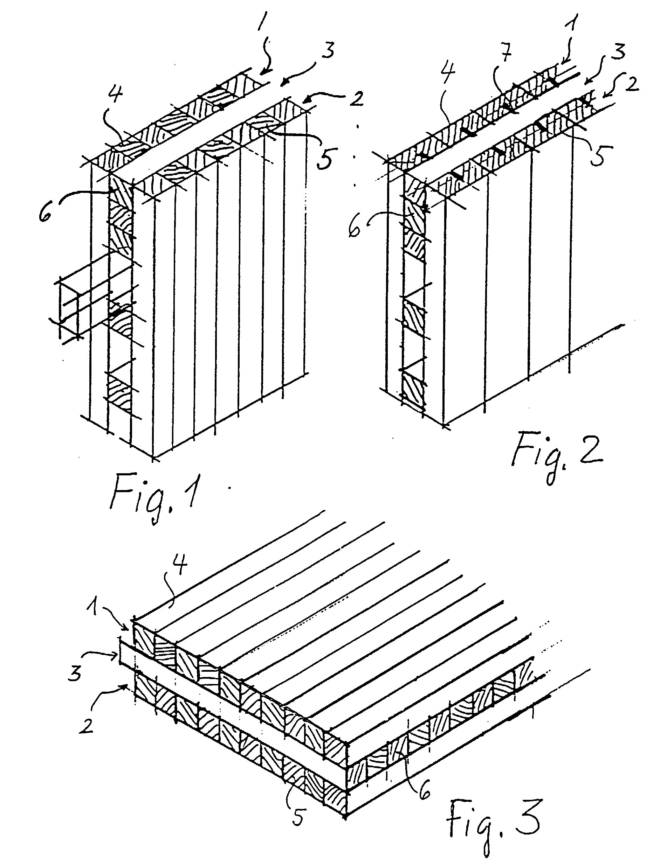

Der in Fig. 1 gezeigte Abschnitt einer abgesperrten Holzplatte besteht aus zwei Deckschichten 1, 2 und einer Zwischenlage 3. Sowohl die Deckschichten als auch die Zwischenschicht bestehen aus Leisten mit quadratischem Querschnitt von 25 x 25 mm. Die eine Deckschicht 1 besteht aus Leisten 4, die dicht nebeneinander angeordnet sind, so dass sie sich entlang der einander zugewandten Längsseiten berühren. Diese Längsseiten sind entgegen dem bisher bekannten abgesperrten Holz nicht miteinander verleimt.

Die zweite Deckschicht 2 besteht analog aus zueinander und zu den Leisten 4 parallelen Leisten 5, die untereinander ebenfalls nicht verleimt sind.

Die Zwischenlage 3 besteht aus Leisten 6, die senkrecht zu den Leisten 4 und 5 der Deckschichten angeordnet sind. Die Leisten 6 sind entlang der Kante der Platte zunächst eng nebeneinander, im Bereich weiter gegen die Plattenmitte zu im Abstand voneinander angeordnet.

Die Leisten 6 sind jeweils an ihren Kreuzungsflächen mit den Leisten 4 und 5 verleimt. Diese Kreuzungsflächen entsprechen dem Leistenquerschnitt und betragen somit 25 x 25 mm. Für die Verleimung wird ein langlebiger Leim verwendet, der den vorgegebenen Bedingungen an Feuchtigkeits- und Temperaturbeständigkeit entspricht. Folgende Leime wurden bereits erfolgreich verwendet: Aerodux® von Ciba-Geigy, Rezocine Harz, Balcotan etc. Zur Verleimung wird vorteilhafterweise ein Pressdruck von 5 kg/cm² angewendet.

Der in Fig. 2 gezeigte Abschnitt einer abgesperrten Holzplatte besteht wiederum aus zwei Deckschichten 1, 2 und einer Zwischenlage 3. Im Unterschied zu der in Fig. 1 gezeigten Ausführungsform haben die Leisten 4 und 5 der Deckschichten 1 und 2 einen Querschnitt von 25 x 50 mm. Eine breite Sichtfläche der einzelnen Leisten der Deckschichten kann aus ästhetischen Gründen erwünscht sein.

Da die verleimten Kreuzungsflächen mit den Leisten der Zwischenlage 3 die Dimension 25 x 25 mm möglichst nicht wesentlich überschreiten sollten, weisen die Leisten 4 und 5 auf den der Zwischenlage 3 zugewandten Flächen Längsnuten 7 auf. Dadurch wird die Verleimungsfläche halbiert und auf die gewünschte Grösse begrenzt.

Der in Fig. 3 gezeigte Abschnitt einer abgesperrten Holzplatte besteht wiederum aus zwei Deckschichten 1, 2 und einer Zwischenlage 3. Im Unterschied zu den beiden Ausführungsformen der Fig. 1 und 2 weist diese Platte auch in der Zwischenschicht 3 dicht nebeneinander angeordnete Leisten 6 auf, die einander berühren, aber nicht untereinander verleimt sind. Die Verleimung beschränkt sich auch bei dieser Version auf die Kreuzungsflächen.

Die Platte mit der geschlossenen Zwischenschicht besitzt eine höhere Biegungsfestigkeit in Längsrichtung der Leisten. Deshalb eignet sie sich vorzugsweise für Anwendungen, bei denen höhere Belastungen vorkommen, d.h. also beispielsweise für Fussböden.

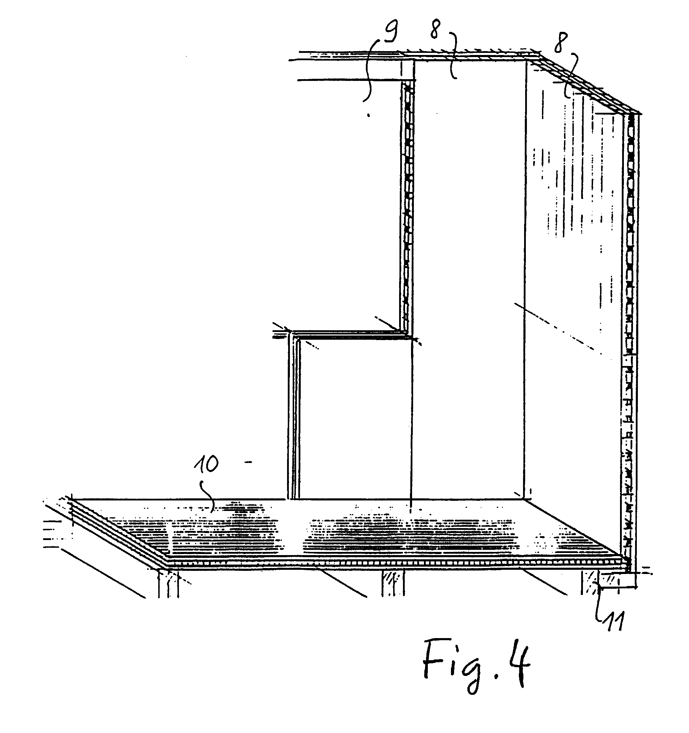

In Fig. 4 ist eine mögliche Verwendung der Platten gezeigt. Die Figur zeigt einen Ausschnitt aus einer Holzkonstruktion im Hochbau, speziell die Ecksituation eines Wohnraumes. Die Wände 8 bestehen aus Platten gemäss den Fig. 1 oder 2. Fensterausschnitte 9 können ohne weiteres vorgenommen werden. Die Wände stehen auf einer Unterkonstruktion 11 aus Kanthölzern, auf der auch ein Fussboden 10 aus Platten gemäss Fig. 3 aufliegt.

## Patentansprüche

1. Abgesperrtes Holzbauelement aus mindestens drei kreuzweise verleimten Schichten parallel angeordneter Leisten, dadurch gekennzeichnet, dass die in einer Schicht (1) parallel angeordneten Leisten (4) untereinander nicht verleimt sind und nur an den Kreuzungsflächen mit den Leisten (6) der angrenzenden Schicht (3) verleimt sind.

2. Abgesperrtes Holzbauelement nach Anspruch 1, dadurch gekennzeichnet, dass die Leisten (6) der mittleren Schicht (3) zueinander Abstand haben.

3. Abgesperrtes Holzbauelement nach Anspruch 1, dadurch gekennzeichnet, dass die Kreuzungsflächen nicht wesentlich grösser als 25 x 25 mm sind.

4. Abgesperrtes Holzbauelement nach einem der vorangehenden Ansprüche, dadurch gekennzeichnet, dass die Leisten (4) der äusseren Deckschichten breiter sind als 25 mm und auf ihren der Zwischenschicht (3) zugewandten Flächen Längsnuten (7) aufweisen.

## Claims

1. Plywood construction element made of at least three crosswise-glued layers of parallelly-arranged slats, characterized in that the parallelly-arranged slats (4) within a layer (1) are not glued to each other and are only glued at the crossing areas to the slats (6) of the adjacent layer(3).

2. Plywood construction element according to claim 1, characterized in that the slats (6) of the central layer (3) are spaced from each other.

3. Plywood construction element according to claim 1, characterized in that the crossing areas are not substantially larger than 25 x25 mm.

4. Plywood construction element according to one of the preceding claims,characterized in that the slats (4) of the outer covering layers are broader than 25 mm and have lengthwise extending grooves (7) on the surfaces facing the intermediate layer (3).

## Revendications

1. Element de construction en bois contreplaqué constitué de lattes disposées parallèlement en au moins trois plis collés transversalement, caractérisé en ce que les lattes (4) disposées parallèllement dans un pli (1) ne sont pas collées mutuellement et sont seulement collées au niveau des surfaces de croisement avec les lattes (6) du pli adjacent (3).

2. Element de construction en bois contreplaqué selon la revendication 1, caractérisé en ce que les lattes (6) du pli intermédiaire (3) présentent un intervalle entre elles.

3. Element de construction en bois contreplaqué selon la revendication 1, caractérisé en ce que les surfaces de croisement ne sont sensiblement pas supérieures à 25 x 25 mm.

4. Element de construction en bois contreplaqué selon l'une quelconque des revendications précédentes, caractérisé en ce que les lattes (4) des plis de couverture extérieure font plus de 25 mm de large et présentent des rainures longitudinales sur leur face tournée vers le pli intermédiaire (3).
